(19) Europäisches Patentamt
European Patent Office
Office européen des brevets

(11) Veröffentlichungsnummer: **0 015 587**
**A1**

# (12) EUROPÄISCHE PATENTANMELDUNG

(21) Anmeldenummer: **80200046.3**

(22) Anmeldetag: **21.01.80**

(51) Int. Cl.³: **C 08 K 5/55**, C 09 D 7/12

(30) Priorität: **16.02.79 DE 2905879**

(43) Veröffentlichungstag der Anmeldung: **17.09.80 Patentblatt 80/19**

(84) Benannte Vertragsstaaten: **AT BE CH FR GB IT LU NL SE**

(71) Anmelder: **Byk-Mallinckrodt Chemische Produkte GmbH, Mallinckrodtstrasse 5, D-4230 Wesel (DE)**

(72) Erfinder: **Haubennestel, Karlheinz, Herzog-Adolf-Strasse 36, D-4230 Wesel 1 (DE)**
Erfinder: **van Balveren, Hermann, Robert-Koch-Strasse 27, D-4230 Wesel 1 (DE)**

(74) Vertreter: **Frühbuss, Heinrich, Dr.rer.nat., Franz-Fischer-Weg 61, D-4300 Essen 13 (DE)**

(54) **Mittel zur Reduzierung der Viskosität von füllstoffhaltigen Kunststoffen.**

(57) Triglykol-Diborate der nachfolgenden Formel:

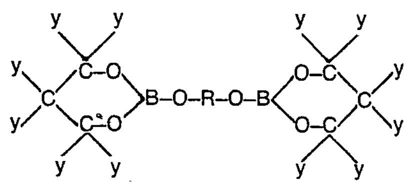

worin

R = Alkylen linear $C_2$–$C_{12}$, Alkylen verzweigt $C_3$–$C_{12}$

y = H, Alkylrest mit 1–4 C-Atomen, Phenyl oder Cyclohexyl

bewirken eine Reduzierung der Viskosität von füllstoffhaltigen Kunststoffharzsystemen, wodurch der Füllstoffgehalt der Systeme erhöht werden kann.

EP 0 015 587 A1

# Mittel zur Reduzierung der Viskosität von füllstoffhaltigen Kunststoffen

Die Viskosität von Kunstharzsystemen hängt in starkem Maß von ihrer Molekulargewichtsverteilung und ihrem Pigment- und Füllstoffanteil ab.
Der Füllstoffanteil ist für gewisse Eigenschaften des Kunstharzsystems verantwortlich, wie z.B. Schlagzähigkeit, Elastizitätsmodul, Zugfestigkeit, Korrosionsschutz, Entflammbarkeit und Preis. So werden die verschiedensten Kunstharzsysteme mit unterschiedlichem chemischem Aufbau - wenn nicht Tranzparenz verlangt wird - mit Füllstoffen und Pigmenten modifiziert. Dies ist umproblematisch solange sich dieser Füllstoffanteil in gewissen Grenzen hält, und wie z.B. in herkömmlichen Lackkunstharzsystemen genügend Lösungsmittel vorhanden sind, mit denen die Viskosität des formulierten Systems eingestellt werden kann.
Anders ist es in Kunstharzsystemen, welche wenig oder kein Lösungsmittel enthalten, wie z.B. hoch-festkörperhaltige Lacke, sogenannte "high solids", lösungsmittelfreie Beschichtungsmassen und glasfaserverstärkte ungesättigte Polyesterharze.
Auf dem Markt befindliche hoch-festkörperhaltige Lack-Systeme enthalten im allgemeinen im fertigen Lack ca. 35 - 30 % Lösungsmittel. Der Wunsch der Hersteller und Anwender dieser Systeme geht jedoch in die Richtung von 20 % Lösungsmittelanteil oder weniger. Die Verarbeitungsviskosität solcher pigmentierter Lacksysteme steigt dann jedoch auf einen so hohen Wert, daß die Verarbeitung dieser Systeme mittels üblicher Applikationstechniken

unverhältnismäßig erschwert wird und der optische Eindruck solcher Beschichtungen aufgrund des mangelhaften Verlaufs den Anforderungen nicht mehr genügt. Ein Einstellen der Viskosität dieser "high solid"-Systeme mittels Lösungsmitteln ist nicht möglich, da hierdurch der Festkörpergehalt wieder gesenkt würde. Somit sind diesen Systemen natürliche Grenzen im Festkörpergehalt, bedingt durch ihre Viskosität, gesetzt.

Lösungsmittelfreie Systeme auf Basis ungesättigtem Polyester, Polyurethan oder Epoxid werden z.B. für mineralölfeste Anstriche, hochkorrosionsbeständige Anstriche, Industrie-Fußboden-Beschichtungen, Spachtelmassen und Straßenbeschichtungen eingesetzt. Bei diesen Systemen kommt es im wesentlichen darauf an, bezogen auf den Kunstharzanteil, hohe Anteile an Füllstoffen und/oder Korrosionsschutzpigmenten neben dekorativen Pigmenten einzuarbeiten. Bedingt durch die Eigenviskosität der verwendeten lösungsmittelfreien Harze sind auch hier die Mengen an Füllstoffen begrenzt, da mit steigendem Füllstoffanteil die Viskosität steigt und eine ordnungsgemäße Verarbeitung nicht mehr möglich ist. Gängige Rezepturen von z.B. selbstverlaufenden Harz-Mörteln enthalten heute schon 200 % und mehr Füllstoffe bezogen auf Bindemittel. Um solche Systeme preiswerter zu gestalten, geht der Wunsch der Hersteller und Anwender solcher Produkte dahin, höhere Füllstoffmengen einzusetzen ohne die verarbeitungstechnischen Eigenschaften negativ zu beeinflussen.

Ungesättigte Polyesterharze werden häufig durch Einbringen von textilen Glasfasern und Füllstoffen verstärkt bzw. modifiziert.
Hierdurch werden die mechanischen Eigenschaften des resultierenden Kunststoffes, z.B. die Zugfestigkeit, das Elastizitätsmodul und die Schlagzähigkeit wesentlich verbessert;

außerdem kann die Entflammbarkeit verringert werden.
Diese Kunststoffe sind unter der Bezeichnung glasfaserverstärkte Kunststoffe (GFK) bekannt.
In Anlehnung an die bekannten glasfaserverstärkten Kunststoffe sind in neuerer Zeit GFK-Systeme in Gebrauch, die außer dem reaktiven Polyesterharz (Duromer) einen bestimmten Anteil einer thermoplastischen Harzes enthalten, meist handelt es sich um ein Acrylpolymer.
Dieser Thermoplast fällt kurz vor der Härtung des eigentlichen ungesättigten Polyesters aus und schließt einen Teil des im System befindlichen monomeren Styrols ein. Durch Verdampfung des Styrols in dem Thermoplasten während der Verarbeitungstemperatur werden die Thermoplastteilchen aufgeschäumt und verhindern so nahzu die übliche Schwindung des GFK.

Diese so modifizierten Systeme werden hauptsächlich im Automobilsektor, Elektrosektor und Sanitärsektor eingesetzt, wo flächig geformte Teile im Heißpreßverfahren daraus hergestellt werden.

Als Füllstoffe für diese Systeme dienen insbesondere Calciumcarbonat, Aluminiumhydroxid, Bariumsulfat, Quarzmehl, Talkum und Kaolin.
Diese Füllstoffe verbilligen den Compound erheblich, so daß der Wunsch der Anwender solcher Systeme besteht, möglichst große Mengen dieser Füllstoffe in den Harzanteil einzuarbeiten.
Dies scheitert normalerweise ab einer gewissen Menge an der dann unzulässig hohen Verarbeitungsviskosität des Compounds.
Als Folge resultiert schlechte Benetzung der Glasfasern, schlechte Entlüftung von vorgefertigten Harzmatten und zu kurzes "Potlife" des Compounds.
Um diese, im Vorhergehenden beschriebenen Nachteile zu beheben, wurden Vorschäge gemacht, die Füllstoffe vorzubehandeln.

Dies wird, wie in der Literatur beschrieben, häufig mit reaktiven Silanen durchgeführt. Diese Silane sollen auch im Falle der glasfaserverstärkten Polyester direkt den Compounds zugegeben werden können, vergl. Literatur: "Surface Modification of Fillers and reinforcement in plastics" - E. Plueddemann - 32. annual technical conferenc, 1977, reinforced plastics/ Composites-Institute the society of the plastic Industrie Inc..

Mit diesen während der Compoundierung zugegebenen Silanen ist zwar eine Verbesserung der mechanischen Eigenschaften von glasfaserverstärkten Kunststoffen erreichbar, aber nur eine unwesentliche Viskositätsreduzierung des Compounds, wie die nachfolgende Tabelle 2 zeigt.

Außerdem werden Organo-Titanate als Haftvermittler und Viskositätsreduzierer empfohlen, vergleiche Kenrich - Petrochemicals Inc. - Bayonne, N.J. 07002 - Bulettin KR 1076-5 u. Bulletin KR 0975-2.

Diese Produkte erfüllen nur bedingt die Aufgabe der Viskositätsreduzierung. Aufgrund ihrer Hydrolyseempfindlichkeit - hierauf beruht ihr Effekt als Haftvermittler - wirken sie gegebenenfalls sogar viskositätserhöhend, wie in Tabelle 2 deutlich zu erkennen ist.
Gemäß vorliegender Erfindung werden Triglykol-Diborate, wie sie in den US-Patentschriften 28 94 020 und 27 41 548 beschrieben sind, als viskositätsreduzierende Mittel eingesetzt.
Erfindungsgemäß geeignete Triglykol-Diborate ergeben bereits mit 0,5 Gew.% Zusatz merkliche Viskositätsreduzierungen in füllstoffhaltigen Kunstharzsystemen. Zugabemengen von über 3 - 4 Gew.% ergeben keine wesentlich zusätzliche Wirkung.

Die Triglykol-Diborate werden hergestellt durch Veresterung von

a. Zwei Mol Orthoborsäure ($H_3BO_3$), Bortrichlorid oder einem niederen Alkylester der Borsäure bzw. 1 Mol Bortrioxid

b. mit zwei Mol eines 1,3-Diols mit der allgemeinen Formel

I 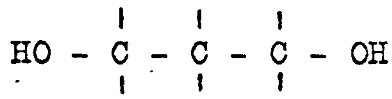

c. und mit einem Mol eines Alkandiols der allgemeinen Formel

II HO - R - OH

Die so erhaltenen Produkte werden durch die allgemeine Formel III beschrieben

III

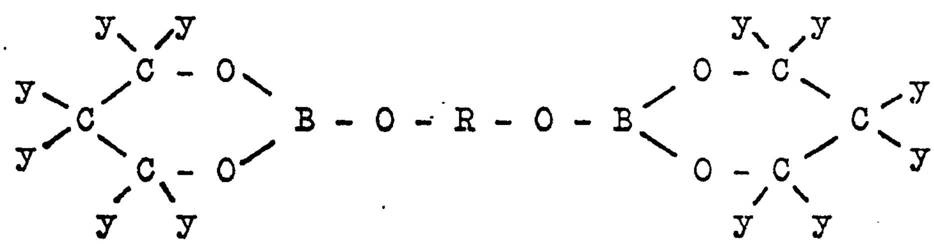

worin

R = Alkylen linear $C_2$ - $C_{12}$

Alkylen verzweigt $C_3$ - $C_{12}$

y = H, Alkylrest mit 1 - 4 C-Atomen

Phenyl oder Cyclohexyl

bedeuten.

Herstellungsbeispiel:

Eine Mischung aus 0,2 Mol Borsäure, 0,2 Mol eines Diols der Formel I (z.B. 2-Äthylhexandiol-1,3) und 0,1 Mol eines Diols der Formel II (z.B. Hexandiol-1,6) werden unter Verwendung von Xylol am Rückfluß gehalten. Hierbei wird das Wasser (98 % der theoretischen Menge) azeotrop entfernt. Nach Abdestillieren des Xylols verbleibt das 1,6-Bis(5-äthyl-4-propyl-1,3,2-dioxabora-2-cyclohexyloxy)hexan als eine farblose, viskose Flüssigkeit.

Die Triglykol-Diborate weisen gegenüber den formalen Borsäureestern, wie Tributyl-, Triamly- oder Tridodecylborat eine ausgezeichnete Hydrolysestabilität auf, was für die erfindungsgemäße Verwendung von Vorteil ist.

Erfindungsgemäß sich ergebende Kunstharzformulierungen I - X sind z.B. die folgenden:

| | | |
|---|---|---|
| I - IV | ≙ | ungesättigte Polyesterharzformulierung für glasfaserverstärkte Kunststoffe |
| V | ≙ | gesättigte Polyesterharzformulierung für 1 Komponenten "high solid"-Lack |
| VI | ≙ | Polyesterurethanharzformulierung für 2 Komponenten "high solid"-Lack |
| VII- X | ≙ | Epoxidharzformulierungen für Fußbodenbeschichtungsmassen. |

Die erfindungsgemäß angewandten Mittel reduzieren nicht nur die Viskosität von Lösungsmittel enthaltenden und lösungsmittelfreien Kunstharz-Füllstoff-Systemen auf der Basis der bekannten Polyester-, Polyurethan- und/oder Epoxiharze, sondern auch von Systemen auf der Basis der Phenol- und/oder Melaminharze sowie der Silikonformmassen und der Polyalkylene, wie insbesondere von Polyäthylen und Polypropylen sowie der Polyamide. Neben einer oder mehreren Basis-Kunstharzen, Füllstoffen und ggf. Lösungsmitteln sollen diese Systeme erfindungsgemäß etwa 0,2- 4, vorzugsweise 0,5 - 2, Gew.-% Triglykol-Diborate enthalten.

Die Bedeutung der Erfindung zeigt sich z.B. bei der Formulierung von mineralölfesten Anstrichen, hoch korrosionsbeständigen Anstrichen, Industriefußbodenbeschichtungen, Spachtelmassen, Straßenbeschichtungen, bei der Herstellung von Teilen für die Elektroindustrie und Massen für den Formenbau. Bei diesen Systemen kommt es in der Regel darauf an, bezogen auf den Kunstharzanteil, hohe Anteile an Füllstoffen und/oder Korrosionsschutzpigmenten neben dekorativen Pigmenten in die Systeme einzuarbeiten.

Polyesterharzrezeptur I

| | | |
|---|---|---|
| Ungesättigtes Polyesterharz (65,6 %ig in Styrol) | | 45,0 Gew.Tle. |
| Viskosität: 1070 mPa·s / Säurezahl: 22,5 | | |
| Acryl-Polymer (40 %ig in Styrol) | | 24,0 Gew.Tle. |
| Viskosität: 5000 mPa·s | | |
| Tert. Butylperbenzoat | | 0,8 Gew.Tle. |
| Zinkstearat | | 4,0 Gew.Tle. |
| Calciumcarbonat | | 120,0 Gew.Tle. |
| MgO-Paste (12 % MgO) | | 6,8 Gew.Tle. |
| Viskositätsreduzierendes Mittel | keines bzw. | 1,2 Gew.Tle. |

Polyesterharzrezeptur II

| | | |
|---|---|---|
| Ungesättigtes Isophthalsäurepolyesterharz (50 %ig in Styrol) | | 50,0 Gew.Tle. |
| Viskosität: 1000 mPa·s / Säurezahl: 14 - 22 | | |
| Tert. Butylperbenzoat | | 0,5 Gew.Tle. |
| Zinkstearat | | 1,0 Gew.Tle. |
| Aluminiumtrihydrat | | 80,0 Gew.Tle. |
| MgO-Paste (12 % MgO) | | 4,7 Gew.Tle. |
| Viskositätsreduzierendes Mittel | keines bzw. | 1,7 Gew.Tle. |

Polyesterharzrezeptur III

| | | |
|---|---|---|
| Ungesättigter Isophthalsäurepolyester (60 %ig in Styrol) | | 65,0 Gew.Tle. |
| Viskosität: 500 mPa·s / Säurezahl: 12,4 | | |
| Acryl-Polymer (40 %ig in Styrol) | | 35,0 Gew.Tle. |
| Viskosität: 5000 mPa·s | | |
| Tert. Butylperbenzoat | | 1,0 Gew.Tle. |
| Zinkstearat | | 3,0 Gew.Tle. |
| Calciumcarbonat | | 150,0 Gew.Tle. |
| MgO-Paste (12 % MgO) | | 9,1 Gew.Tle. |
| Viskositätsreduzierendes Mittel | keines bzw. | 1,5 Gew.Tle. |

Polyesterharzrezeptur IV

| | | |
|---|---|---|
| Ungesättigter Isophthalsäurepolyester (60 %ig in Styrol) | | 65,o Gew.Tle. |
| Viskosität: 500 mPa·s / Säurezahl: 12,4 | | |
| Acryl-Polymer (40 %ig in Styrol) | | 35,0 Gew.Tle. |
| Viskosität: 5000 mPa·s | | |
| Tert. Butylperbenzoat | | 1,0 Gew.Tle. |
| Zinkstearat | | 3,0 Gew.Tle. |
| Aluminiumtrihydrat | | 80,0 Gew.Tle. |
| Aluminiumsilikat | | 30,0 Gew.Tle. |
| MgO-Paste (12 % MgO) | | 9,1 Gew.Tle. |
| Viskositätsreduzierendes Mittel | keines bzw. | 1,1 Gew.Tle. |

1 Komponenten High-solid-Lackrezeptur V

| | |
|---|---|
| gesättigter Polyester (80 %ig) | 101,0 Gew.Tle. |
| Ruß-Pigment | 0,8 Gew.Tle. |
| Phthaloblau-Pigment | 1,1 Gew.Tle. |
| $TiO_2$ | 18,0 Gew.Tle. |
| Silikonpolymer | 0,8 Gew.Tle. |
| Lösungsmittel (Alkohol-Estergemisch) | 42,o Gew.Tle. |
| Melaminharz (74 %ig in Isobutanol) | 36,0 Gew.Tle. |
| viskositätsreduzierendes Mittel | 1,8 Gew.Tle. |

Lösungsmittelgehalt: 35,8 %

2 Komponenten High-solid-Lackrezeptur VI

| | |
|---|---|
| hydroxylgruppenhaltiger Polyester (80 %ig) | 86,1 Gew.Tle. |
| Ruß-Pigment | 0,45 Gew.Tle. |
| Phthaloblau-Pigment | 0,60 Gew.Tle. |
| $TiO_2$ | 10,1 Gew.Tle. |
| Ca-Naphthenat (4 % Ca) | 1,5 Gew.Tle. |
| Netzmittel | 0,4 Gew.Tle. |
| Silikonpolymer | 0,45 Gew.Tle. |
| hydrophobes $SiO_2$ | 1,0 Gew.Tle. |
| Lösungsmittel | 20,0 Gew.Tle. |
| Isocyanat-Prepolymer (80 %ig) | 102,7 Gew.Tle. |
| viskositätsreduzierendes Mittel | 2,2 Gew.Tle. |

Lösungsmittelgehalt: 26,0 Gew.%

Epoxidharzrezeptur VII

| | |
|---|---|
| flüssiges Epoxidharz (100 %ig) (Epoxid-Äquivalentgewicht = 200) | 100,0 Gew.Tle. |
| Quarzmehl | 150,o Gew.Tle. |
| Aminhärter (-H-Äquivalentgewicht = 60) | 30,0 Gew.Tle. |
| viskositätsreduzierendes Mittel | 2,0 Gew.Tle. |

Epoxidharzrezeptur VIII

| | |
|---|---|
| flüssiges Epoxidharz (100 %ig) (Epoxid-Äquivalentgewicht = 200) | 100,0 Gew.Tle. |
| Quarzmehl | 150,0 Gew.Tle. |
| Aminhärter (-H-Äquivalentgewicht = 60) | 30,0 Gew.Tle. |
| viskositätsreduzierendes Mittel | 1,5 Gew.Tle. |

Epoxidharzrezeptur IX

| | |
|---|---|
| flüssiges Epoxidharz (1oo %ig) (Epoxid-Äquivalentgewicht = 200) | 100,0 Gew.Tle. |
| Kreide | 200,0 Gew.Tle. |
| Aminhärter (-H-Äquivalentgewicht = 60) | 30,0 Gew.Tle. |
| viskositätsreduzierendes Mittel | 2,0 Gew.Tle. |

Epoxidharzrezeptur X

| | |
|---|---|
| Epoxidharzgemisch (100 %ig) (Epoxid-Äquivalentgewicht = 400) | 100,0 Gew.Tle. |
| Eisenoxidrot-Pigment | 10,0 Gew.Tle. |
| Aluminiumoxid | 20,0 Gew.Tle. |
| Antimontrioxid | 10,0 Gew.Tle. |
| Glasperlen (Ø ≈ 200 µm) | 160,0 Gew.Tle. |
| Aminhärter (-H-Äquivalentgewicht = 60) | 15,0 Gew.Tle. |
| viskositätsreduzierendes Mittel | 2,0 Gew.Tle. |

Folgende, in den Tabellen 1a und 1b aufgeführten cyclischen Borsäureester wurden, wie in der US-Patentschrift 28 94 020 und der vorstehenden allgemeinen Herstellungsvorschrift beschrieben, hergestellt. Die Produkte 1 - 8 wurden gemäß der Polyesterharzrezeptur I verarbeitet und im Vergleich zu handelsüblichen, zur Viskositätsreduzierung empfohlenen Titanaten und Organosilanen geprüft. Die Ergebnisse zeigt die Tabelle 2.

Weiterhin wurden aus den in Tabelle 2 aufgeführten verschiedenen Produktklassen je ein Produkt ausgewählt und gemäß den Polyesterharzformulierungen II, III und IV verarbeitet. Die hiermit erzielten Ergebnisse zeigt die Tabelle 3.

Die Kunstharzformulierungen V - X wurden jeweils

a. ohne jeden Zusatz
b. mit einem der in Tabelle 1a beschriebenen Triglykol-Diborate
und c. einem der handelsüblichen, in der vorerwähnten Literatur beschriebenen Titanate

hergestellt und die Viskositäten gemessen. Die Ergebnisse zeigt Tabelle 4.

Tabelle 1 a

| | Diole | | |
|---|---|---|---|
| | Diol nach Formel I | Diol nach Formel II | resultierender cyclischer Borsäureester |
| Produkt 1 | 2-Äthylhexandiol-1,3 | Butandiol-1,4 | 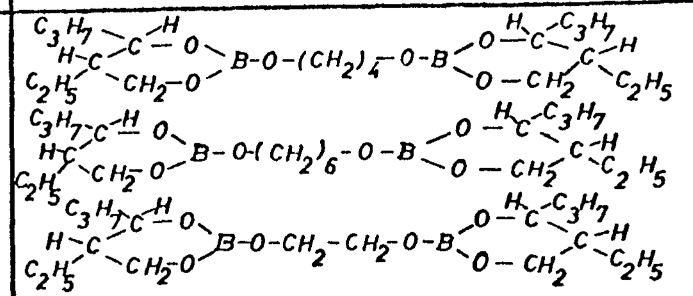 |
| Produkt 2 | 2-Äthylhexandiol-1,3 | Hexandiol-1,6 | |
| Produkt 3 | 2-Äthylhexandiol-1,3 | Äthylenglykol | |
| Produkt 4 | 2-Methyl-2-propyl-propandiol-1,3 | Butandiol-1,4 | 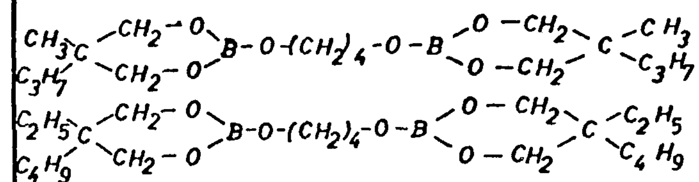 |
| Produkt 5 | 2-Äthyl-2-butyl propandiol-1,3 | Butandiol-1,4 | |
| Produkt 6 | 2-Methyl-2-phenyl-propandiol-1,3 | Butandiol-1,4 | 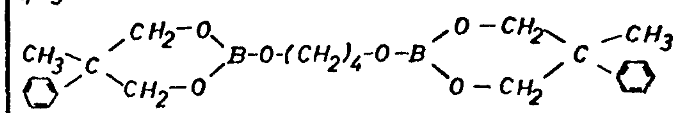 |
| Produkt 7 | Butandiol-1,3 | Butandiol-1,4 | 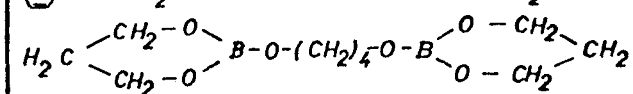 |
| Produkt 8 | Butandiol-1,3 | Hexandiol-1,6 | 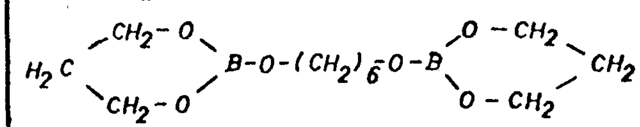 |

Tabelle 1 b

| | Diole<br>Diol nach Formel I | <br>Diol nach Formel II | resultierender cyclischer Borsäureester |
|---|---|---|---|
| Produkt 9 | 2-Äthylhexandiol-1,3 | Decandiol-1,10 | 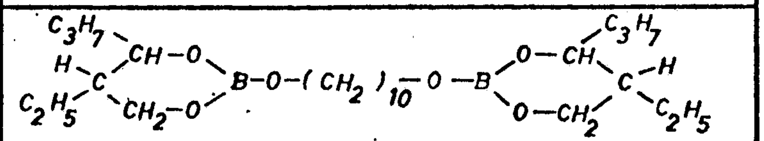 |
| Produkt 10 | 2-Äthylhexandiol-1,3 | Dodecandiol-1,12 | 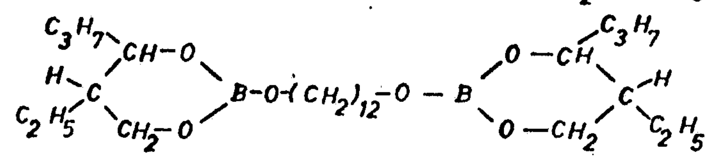 |
| Produkt 11 | 2-Äthylhexandiol-1,3 | 2,4,4-Trimethyl-hexandiol-1,6 | 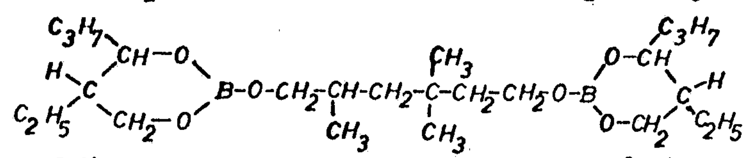 |
| Produkt 12 | 2-Äthylhexandiol-1,3 | 2-Äthylhexandiol-1,3 | 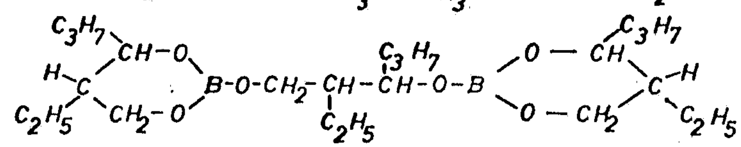 |
| Produkt 13 | 2-Methyl-2-Cyclo-hexyl-propandiol-1,3 | Butandiol-1,4 | 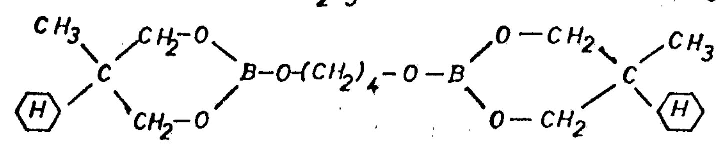 |

Tabelle 2

| Additiv | Viskosität (32 °C) System: Brookfield HBT Spindel 5 (5 U/min) | Viskositäts-änderung (%) |
|---|---|---|
| 0-Probe | 720 Pa·s | - |
| Borsäureester 1 | 486 Pa·s | - 31,1 |
| Borsäureester 2 | 496 Pa·s | - 31,1 |
| Borsäureester 3 | 570 Pa·s | - 20,8 |
| Borsäureester 4 | 480 Pa·s | - 33,3 |
| Borsäureester 5 | 496 Pa·s | - 31,1 |
| Borsäureester 6 | 528 Pa·s | - 26,6 |
| Borsäureester 7 | 592 Pa·s | - 17,7 |
| Borsäureester 8 | 576 Pa·s | - 20,0 |
| Silan 1 | 663 Pa·s | - 8,0 |
| Silan 2 | 1188 Pa·s | + 65,1 |
| Titanat 1 | 861 Pa·s | + 19,6 |
| Titanat 2 | 761 Pa·s | + 5,7 |
| Titanat 3 | 822 Pa·s | + 14,2 |
| Titanat 4 | 1069 Pa·s | + 48,5 |
| Titanat 5 | 720 Pa·s | ± 0 |
| Titanat 6 | 925 Pa·s | + 28,5 |

<u>Silan 1:</u> N-ß-(Äthylmethacryloxy)-dimethylammoniumpropyl-trimethoxysilylchlorid
<u>Silan 2:</u> N-ß-(N-vinylbenzyl-amino)-äthyl-γ-aminopropyl-trimethoxysilan Hydrochlorid
<u>Titanat 1:</u> Isopropyl-tri-(dioktylpyrophosphato)titanat
<u>Titanat 2:</u> Tetra(2,2-diallyloxymethyl-1-butoxy)titanium-di(di-tridecyl)phosphit
<u>Titanat 3:</u> Tetraoktyloxytitanium-di(ditridecylphosphit)
<u>Titanat 4:</u> Titanium-di(dioktylpyrophosphat)oxyacetat
<u>Titanat 5:</u> Tetraisopropyl-di(dilaurylphosphito)titanat
<u>Titanat 6:</u> Isopropyl-triisostearoyl-titanat

Tabelle 3

| | Polyester II | | Polyester III | | Polyester IV | |
|---|---|---|---|---|---|---|
| | Viskosität 5 U/min | Viskositäts-änderung | Viskosität 5 U/min | Viskositäts-änderung | Viskosität 5 U/min | Viskositäts-änderung |
| O-Probe | 1984 Pa·s | - | 1168 Pa·s | - | 592 Pa·s | - |
| Borsäureester 1<br>1,4-bis(5-äthyl-4-propyl-1,3,2-dioxabora-2-cyclohexyloxy)butan | 732 Pa·s | -63,1 % | 832 Pa·s | -28,8 % | 528 Pa·s | -10,8 % |
| Silan 2<br>N-ß-(N-vinylbenzylamino)-äthyl-γ-aminopropyl-trimethoxysilan · HCl | 2720 Pa·s | +37,1 % | 1136 Pa·s | - 2,7 % | 768 Pa·s | +29,7 % |
| Titanat 2<br>Tetra(2,2-diallyloxymethyl-1-butoxy)-titanium-di(di-tridecyl)phosphit | 2432 Pa·s | +22,5 % | 1792 Pa·s | +53,4 % | 800 Pa·s | +35,1 % |

Tabelle 4

| Kunstharz-system | | 0-Probe | Borsäureester 1 | Titanat 1 |
|---|---|---|---|---|
| V | Viskosität[1] mPa·s | 320 mPa·s | 215 mPa·s | 390 m Pa·s |
| | Viskositäts-änderung % | - | -32,8 % | +21,8 % |
| VI | Viskosität[1] mPa·s | 1000 mPa·s | 660 mPa·s | 1140 mPa·s |
| | Viskositäts-änderung % | - | -34,0 % | +14,0 % |
| VII | Viskosität[2] Pa·s | 46,4 Pa·s | 36,8 Pa·s | 182,4 Pa·s |
| | Viskositäts-änderung % | - | -20,7 % | +293 % |
| VIII | Viskosität[1] Pa·s | 5,6 Pa·s | 4,3 Pa·s | 15,5 Pa·s |
| | Viskositäts-änderung % | - | -23,2 % | +176,7 % |
| IX | Viskosität[2] Pa·s | 68,8 Pa·s | 51,2 Pa·s | 164,8 Pa·s |
| | Viskositäts-änderung % | - | -24,8 % | +139,5 % |
| X | Viskosität[1] Pa·s | 14,0 Pa·s | 10,7 Pa·s | 23,0 Pa·s |
| | Viskositäts-änderung % | - | -23,5 % | +64,2 % |

**Viskositätsmessung: Brookfield LVT**
**Temperatur: 32 °C**

1) **Spindel 2, 1,5 U/min**

2) **Spindel 6, 5 U/min**

Die in den Tabellen 2, 3 und 4 zusammengefaßten Ergebnisse lassen erkennen, daß die erfindungsgemäß zugesetzten Triglykol-Diborate in allen verwendeten Kunstharzsystemen mit unterschiedlichen Füllstoffen/Pigmenten und Füllstoff-/Pigmentmengen außergewöhnliche Viskositätsreduzierungen erbringen, die zwischen 10 % und 63 % liegen, im Mittelwert jedoch zwischen 25 % und 30 %.

Die vergleichsweise eingesetzten Organo-Titanate und Organo-Silane erbringen maximal 8 % Viskositätsreduzierung, im Mittel jedoch eine Viskositätserhöhung von 25 % bis 30 %, wenn sie direkt der Kunstharzformulierung zugegeben werden.

## Patentanspruch

Mittel zur Reduzierung der Viskosität von füllstoffhaltigen Kunstharzsystemen, bestehend aus Triglykol-Diboraten der nachfolgenden Formel:

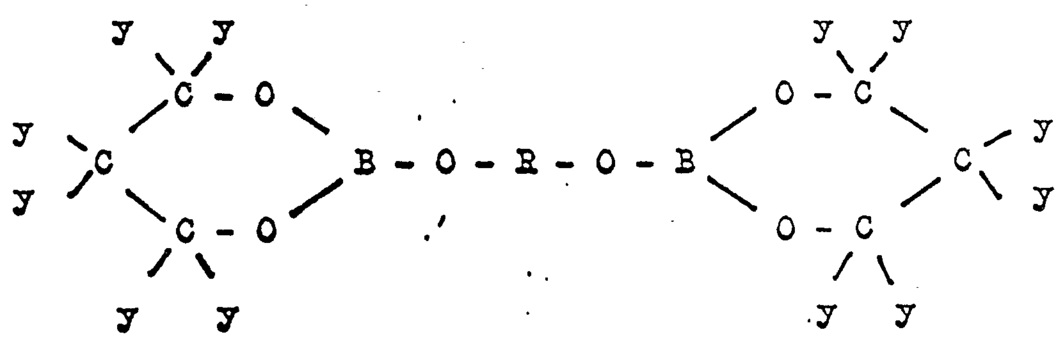

worin

R = Alkylen linear $C_2$ - $C_{12}$
Alkylen verzweigt $C_3$ - $C_{12}$

y = H, Alkylrest mit 1 - 4 C-Atomen
Phenyl oder Cyclohexyl

bedeuten.

0015587

Nummer der Anmeldung

EP 80 20 [illegible]

Europäisches Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| DA | US - A - 2 894 020 (ROBERT J. McMANIMIE)<br>* Spalte 3, Zeilen 62-65 *<br>-- | 1 |
| A | GB - A - 783 605 (HOECHST)<br>* Seite 1, Zeilen 45-51; Seite 2, Zeilen 95,96 *<br>---- | 1 |

**KLASSIFIKATION DER ANMELDUNG (Int.Cl. 3)**

C 08 K 5/55
C 09 D 7/12

**RECHERCHIERTE SACHGEBIETE (Int. Cl. 3)**

C 08 K 5/55
5/00
7/00
C 09 D 7/06
7/12
C 08 L 67/06
C 09 D 3/64

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 25-06-1980 | LENSEN |

EPA form 1503.1 06.78